# EUROPEAN PATENT SPECIFICATION

(11) **EP 3 196 062 B1**
(45) Date of publication and mention of the grant of the patent: **20.02.2019**
(21) Application number: 16834078.4
(22) Date of filing: 07.12.2016
(51) Int. Cl.: E05F 15/72, B60J 7/057, B60R 21/01, B60R 21/0132

(54) **METHOD AND SYSTEM FOR CONTROLLING OPENING AND CLOSING OF A CAR SUNROOF**
VERFAHREN UND SYSTEM ZUR STEUERUNG DES ÖFFNENS UND SCHLIESSENS EINES FAHRZEUGSCHIEBEDACHS
PROCÉDÉ ET SYSTÈME PERMETTANT DE COMMANDER L'OUVERTURE ET LA FERMETURE D'UN TOIT OUVRANT DE VOITURE

(30) Priority: 09.12.2015 CN 201510901712
(43) Date of publication of application: 26.07.2017
(73) Proprietor: Ningbo Shuaitelong Group Co., Ltd., Yinzhou District Ningbo Zhejiang 315157 (CN)
(72) Inventor: WU, Zhiguang, Ningbo Zhejiang 315157 (CN); CHEN, Pengzhan, Ningbo Zhejiang 315157 (CN); DAI, Huatong, Ningbo Zhejiang 315157 (CN); XIONG, Ruibin, Ningbo Zhejiang 315157 (CN); WU, Minai, Ningbo Zhejiang 315157 (CN); LU, Juan, Ningbo Zhejiang 315157 (CN)
(74) Representative: Loo, Chi Ching
(86) International application number: PCT/CN2016/108954
(87) International publication number: WO 2017/097213

(56) References cited:
- CN-A- 103 192 786
- CN-A- 103 192 786
- CN-A- 103 434 508
- CN-A- 103 434 508
- CN-A- 105 035 004
- CN-A- 105 539 105
- CN-U- 203 559 693
- DE-A1- 10 246 917
- DE-A1-102013 000 992
- KR-A- 20050 036 579
- KR-A- 20050 036 579
- KR-A- 20150 067 413
- US-A1- 2003 071 446
- US-A1- 2009 192 681

## Description

### BACKGROUND OF THE INVENTION

### Technical Field

The present invention relates to the field of automatic control, and in particular to a method and system for controlling the opening and closing of a vehicle sunroof

### 2. Description of Related Art

In recent years, as traffic accidents occur more frequently, cases leading to casualties and property losses are too numerous to mention. Moreover, the traffic accidents occur in more and more patterns, including front, lateral and rear collisions, as well as overturning or deflection or accidentally falling into water and the like, resulting from overly high speed and emergency braking.

If a vehicle sunroof is in an open state when an accident such as overturning or car body deflection occurs, it is possible to eject people from the car body resulting in accidental injuries; moreover, a car door may be sunken or crushed after various types of collisions and overturning and thus cannot be opened, and if the vehicle sunroof, as the only escape opening, cannot be opened at that time, the escape and rescue time for the driver or passenger is delayed to further increase the casualty probability for the driver or passenger. US 20030071446 discloses a method of activating surfaces which limit an inner space of a motor vehicle and are movable by adjusting drives.

### BRIEF SUMMARY OF THE INVENTION

Based on the problems described above, the present invention provides a method and system for controlling the opening and closing of a vehicle sunroof, where the vehicle sunroof is controlled to open and close automatically in time by acquiring a traveling state of the vehicle, so that the safety of the passengers is guaranteed to a maximal extent when an accident occurs, and the timely escape of the passengers is facilitated after an accident occurs.

The method for controlling the opening and closing of the vehicle sunroof provided by the present invention comprises the following steps:
acquiring an acceleration signal and an airbag deployment signal from a vehicle;
controlling the vehicle sunroof to close or to maintain a closed state when the acceleration signal exceeds a preset threshold and/or the airbag deployment signal is detected;
acquiring a speed signal from the vehicle after the vehicle sunroof is controlled to close or to maintain the closed state;
acquiring a tilt angle signal from the vehicle after the speed signal indicates that a vehicle speed is zero and continues for a set period; and
controlling the vehicle sunroof to open when the tilt angle signal indicates that the vehicle roof is located on the upside or at one side.

As an implementable means, after controlling the vehicle sunroof to close or to maintain the closed state and before acquiring the speed signal from the vehicle, the method further comprises the following step:
acquiring the acceleration signal from the vehicle, and stopping controlling the vehicle sunroof to close or to maintain the closed state when an angle between an acceleration and a gravitational acceleration of the vehicle is less than a preset angle value.

As an implementable means, while acquiring the acceleration signal from the vehicle, the method may further comprise the following step:
recording a duration in which the angle between the acceleration and the gravitational acceleration of the vehicle is less than the preset angle value, and stopping controlling the vehicle sunroof to close or to maintain the closed state when the duration is more than a preset duration value.

As an implementable means, while stopping controlling the vehicle sunroof to close or to maintain the closed state, the method may further comprise the following step:
controlling a vehicle sunroof control button to send an alerting signal.

As an implementable means, the method for controlling the opening and closing of the vehicle sunroof of the present invention may further comprise the following step:
acquiring an angular speed signal from the vehicle in real time, and controlling the vehicle sunroof to close or to maintain the closed state when the angular speed signal exceeds a preset angular speed threshold.

As an implementable means, the method for controlling the opening and closing of the vehicle sunroof of the present invention may further comprise the following step:
acquiring the tilt angle signal from the vehicle in real time, and controlling the vehicle sunroof to close or to maintain the closed state when the tilt angle signal indicates that the tilt angle of the vehicle is more than a set tilt angle.

Correspondingly, the present invention further provides a system for controlling the opening and closing of a vehicle sunroof, comprising a first acquisition module, a first control module, a second acquisition module, a third acquisition module and a second control module, wherein
the first acquisition module is used for acquiring an acceleration signal and an airbag deployment signal from the vehicle;
the first control module is used for controlling the vehicle sunroof to close or to maintain a closed state when the acceleration signal acquired by the first acquisition module exceeds a preset threshold and/or the first acquisition module detects the airbag deployment signal;
the second acquisition module is used for acquiring a speed signal from the vehicle after the first control module controls the vehicle sunroof to close or to maintain the closed state;
the third acquisition module is used for acquiring the tilt angle signal from the vehicle after the speed signal acquired by the second acquisition module indicates that the vehicle speed is 0 and continues for a set period; and
the second control module is used for controlling the vehicle sunroof to open when the tilt angle signal acquired by the third acquisition module indicates that the vehicle roof is located on the upside or at one side.

As an implementable means, the system for controlling the opening and closing of the vehicle sunroof of the present invention further comprises a third control module; and
the third control module is used for acquiring the acceleration signal from the vehicle before the second acquisition module acquires the speed signal from the vehicle, and stopping controlling the vehicle sunroof to close or to maintain the closed state when the angle between the acceleration and the gravitational acceleration of the vehicle is less than a preset angle value.

As an implementable means, the system for controlling the opening and closing of the vehicle sunroof of the present invention may further comprise a fourth control module; and
the fourth control module is used for recording a duration in which the angle between the acceleration and the gravitational acceleration of the vehicle is less than the preset angle value while the third control module acquires the acceleration signal from the vehicle, and stopping controlling the vehicle sunroof to close or to maintain the closed state when the duration is more than a preset duration value.

As an implementable means, the system for controlling the opening and closing of the vehicle sunroof of the present invention may further comprise a fifth control module; and
the fifth control module is used for controlling the vehicle sunroof control button to send an alerting signal when the third or fourth control modules stops controlling the vehicle sunroof to close or to maintain the closed state.

As an implementable means, the system for controlling the opening and closing of the vehicle sunroof of the present invention may further comprise a fourth acquisition module; and
the fourth acquisition module is used for acquiring the angular speed signal from the vehicle in real time, and controlling the vehicle sunroof to close or to maintain the closed state when the angular speed signal exceeds a preset angular speed threshold.

As an implementable means, the system for controlling the opening and closing of the vehicle sunroof of the present invention may further comprise a fifth acquisition module; and
the fifth acquisition module is used for acquiring the tilt angle signal from the vehicle in real time, and controlling the vehicle sunroof to close or to maintain the closed state when the tilt angle signal indicates that the tilt angle of the vehicle is more than a set tilt angle.

The present invention has the following advantageous effects: with the method and system for controlling the opening and closing of the vehicle sunroof provided by the present invention, by acquiring the acceleration signal and the airbag deployment signal from the vehicle, the vehicle sunroof is controlled to close or to maintain a closed state when the acceleration signal exceeds a preset threshold and/or the airbag deployment signal is detected. Therefore, the passengers are prevented from being injured by being ejected from the sunroof and separated from the vehicle body when an accident occurs. Further, the speed signal from the vehicle is acquired after the vehicle sunroof is controlled to close or to maintain the closed state, the tilt angle signal from the vehicle is acquired after the speed signal indicates that the vehicle speed is 0 and continues for a set period, and the vehicle sunroof is controlled to open when the tilt angle signal indicates that the vehicle roof is located on the upside or at one side. Therefore, the vehicle sunroof is controlled to open automatically when the vehicle is judged to be in a stop state and has undergone inclining or overturning according to the speed signal and tilt angle signal from the vehicle, so that the passengers may escape from the sunroof to be rescued in time after an accident occurs, thereby reducing casualties resulting from escape failures after an accident occurs. The driving safety coefficient of the vehicle can be improved effectively with the method and system for controlling the opening and closing of the vehicle sunroof provided by the present invention.

### BRIEF DESCRIPTION OF THE SEVERAL VIEWS OF THE DRAWINGS

FIG. 1 is a schematic diagram of the process flow of a method for controlling the opening and closing of a vehicle sunroof provided by Embodiment One of the present invention; and
FIG. 2 is a schematic diagram of the structure of a system for controlling the opening and closing of a vehicle sunroof provided by Embodiment Two of the present invention.

### DETAILED DESCRIPTION OF THE INVENTION

The above and additional technical features and advantages of the present invention will be described clearly and completely below in combination with accompanying drawings, and it is obvious that the embodiments described below are merely part of rather than all of the embodiments of the present invention.

The present invention will be further illustrated below in combination with the accompanying drawings and particular embodiments.

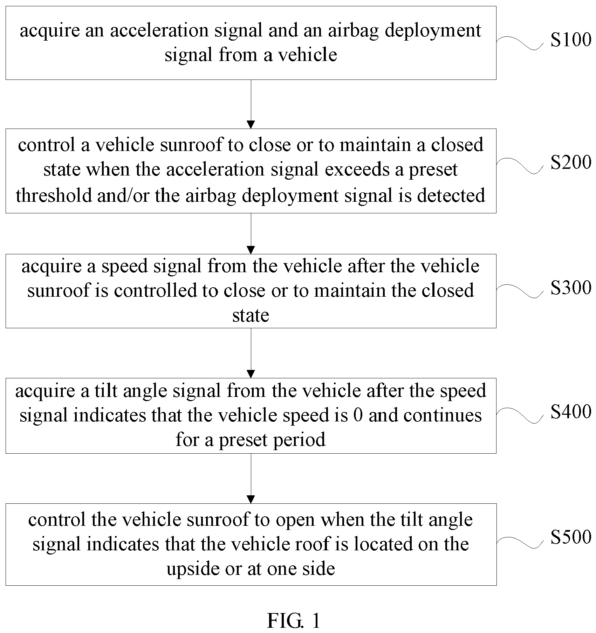

With reference to FIG. 1, the method for controlling the opening and closing of the vehicle sunroof provided by Embodiment One of the present invention comprises the following steps:
SI00, acquiring an acceleration signal and an airbag deployment signal from a vehicle;
S200, controlling the vehicle sunroof to close or to maintain a closed state when the acceleration signal exceeds a preset threshold and/or the airbag deployment signal is detected;
S300, acquiring a speed signal from the vehicle after the vehicle sunroof is controlled to close or to maintain the closed state;
S400, acquiring a tilt angle signal from the vehicle after the speed signal indicates that the vehicle speed is 0 and continues for a preset period;
S500, controlling a vehicle sunroof to open when the tilt angle signal indicates that the vehicle roof is located on the upside or at one side;

In the present embodiment, an acceleration signal or an airbag deployment signal from a vehicle is detected at first to judge whether the vehicle is in an unsteady state (i.e. an abnormal stop or traveling state), and if the vehicle is in an unsteady state, the vehicle sunroof is controlled to close automatically or to maintain a closed state to prevent passengers from being injured by being ejected from the sunroof or separated from the vehicle body when an accident occurs. Further, a speed signal and a tilt angle signal from the vehicle are acquired, and the sunroof is controlled to open automatically when the vehicle is judged to be in the stop state and has undergone inclining or overturning according to the speed signal and tilt angle signal from the vehicle, so that the passengers may escape from the sunroof to be rescued in time after an accident occurs, thereby reducing casualties resulting from escape failures after an accident occurs.

Next, the principle and implementation process of the present invention are illustrated in detail according to specific application scenarios.

### Application Scenario One

In general, when undergoing collision, overturning and other accidents, a vehicle usually has a higher acceleration. One implementation of Embodiment One of the present invention is as follows: an acceleration signal from a vehicle is detected at first to judge whether the vehicle is in an unsteady state (i.e. an abnormal stop or traveling state); when the acceleration of the vehicle exceeds a threshold, it indicates that the vehicle is in an ultrafast acceleration and even out-of-control state, and there is a risk of throwing passengers away from the vehicle body; and accordingly, the vehicle sunroof is controlled to close automatically or maintain a closed state with the present invention so as to prevent the passengers from being injured by being ejected from the interior of the vehicle body and separated from the vehicle body. Further, the speed signal and tilt angle signal from the vehicle are acquired; after the vehicle speed is 0 and continues for a preset period T, it is indicated that the vehicle is in the stop state and has undergone tilting or overturning when judging that the vehicle roof is located on the upside or at one side according to the tilt angle signal from the vehicle; and the sunroof is controlled to open automatically so that the passengers may escape from the sunroof to be rescued in time after an accident occurs, thereby reducing casualties resulting from escape failures after an accident occurs.

### Application Scenario Two

In view of the actual driving of the vehicle, there is a situation in which collisions and other accidents may also occur when the acceleration of the vehicle is not so high (without exceeding the threshold above), another implementation of the present invention is to judge whether the vehicle has undergone a collision, overturned or other accidents by detecting an airbag deployment signal.

The current vehicles basically have safety airbags, which are opened under a necessary condition instead of being deployed once the vehicle speed reaches a specified value. General conditions are as follows: the vehicle speed reaches more than 50km per hour, a front collision occurs first, or the colliding object or barrier is rigid. However, the airbag deployment instruction is transmitted from a sensor, which works by sensing the deceleration of the vehicle.

Based on this, a controller is used to acquire airbag deployment information in the present embodiment; when the airbag deployment signal is detected, it indicates that the vehicle is in a sudden deceleration state, and there is a risk of throwing passengers away from the vehicle body; and at this time, the vehicle sunroof is controlled to close automatically or maintain a closed state with the present embodiment so as to prevent the passengers from being injured by being ejected from the interior of the vehicle body and separated from the vehicle body. Further, the speed signal and tilt angle signal from the vehicle are acquired; after the vehicle speed is 0 and continues for a preset period T, it is indicated that the vehicle is in the stop state and has undergone inclining or overturning when judging that the vehicle roof is located on the upside or at one side according to the tilt angle signal from the vehicle; and the sunroof is controlled to open automatically so that the passengers may escape from the sunroof to be rescued in time after an accident occurs, thereby reducing casualties resulting from escape failures after an accident occurs.

In the embodiment described above, the acceleration signal, speed signal and tilt angle signal from the vehicle can be acquired by corresponding sensors. For example, the acceleration signal, speed signal and tilt angle signal from the vehicle, as well as a real-time orientation thereof can be detected with a six-axis sensor in real time, thereby judging the tilt angle of the vehicle with the real-time orientation. A vehicle condition can be judged autonomously with a vehicle controller, which can reflect an unexpected incident of the vehicle timely and close the vehicle windows directly to guarantee the safety of passengers. An acceleration signal threshold is approximately 2 to 10m/s², and can be enabled automatically in a steady situation, and a preset period T is 3 to 360 seconds to guarantee an escape and rescue time for the driver or passenger, thereby greatly increasing the safety of the passengers.

Further, based on the embodiment described above and in view of a situation where a vehicle falls into water during actual traveling of the vehicle, in Step S200 described above, after controlling the vehicle sunroof to close or to maintain the closed state and before acquiring the speed signal from the vehicle, the method further comprises the following step:
S210, acquiring the acceleration signal from the vehicle, and stopping controlling the vehicle sunroof to close or to maintain the closed state when the angle between the acceleration and the gravitational acceleration of the vehicle is less than a preset angle value.

Whether the vehicle falls into water is judged by further detecting an angle between the acceleration and the gravitational acceleration of the vehicle; when the angle between the acceleration and the gravitational acceleration of the vehicle is smaller than a preset value, the vehicle can be judged to have likely fallen into the water; and at this time, the vehicle is controlled to stop the automatic opening of the sunroof, and the passengers may actively open the sunroof if necessary, thereby guaranteeing the safe judgment of a complex situation and increasing the safety of the passengers.

Still further, in Step S210, while acquiring the acceleration signal from the vehicle, the method further comprises the following step:
S211, recording a duration in which the angle between the acceleration and the gravitational acceleration of the vehicle is less than the preset angle value, and stopping controlling the vehicle sunroof to close or to maintain the closed state when the duration is more than a preset duration value.

By introducing timing judgment here, the duration may be set to be 1 to 3 seconds to exclude some misjudgment cases such as overturning or falling of the vehicle, thereby guaranteeing the accuracy of the judgment.

In the embodiment described above, while stopping controlling the vehicle sunroof to close or to maintain the closed state, a vehicle sunroof control button may also be controlled to send an alerting signal to alert passengers that the vehicle sunroof may be opened manually, so as to prevent the fact that the passengers in a hurry cannot find the vehicle sunroof control button.

Further, based on the embodiment described above, the method for controlling the opening and closing of the vehicle sunroof provided by another embodiment of the present invention further comprises the following step: acquiring the angular speed signal from the vehicle in real time, and controlling the vehicle sunroof to close or to maintain the closed state when the angular speed signal exceeds a preset angular speed threshold.

When the angular speed signal exceeds the set angular speed threshold, it is judged that the vehicle has undergone slipping deflection and is liable to be in a dangerous situation, and the vehicle sunroof is controlled to close automatically at this time. In this way, once an accident occurs, the passengers can be prevented from being passively separated from the vehicle body since the sunroof is in the closed state, thereby guaranteeing the safety of the passengers.

Still further, based on the embodiment described above, the method for controlling the opening and closing of the vehicle sunroof provided by another embodiment of the present invention further comprises the following step: acquiring the angular speed signal from the vehicle in real time, and controlling the vehicle sunroof to close or to maintain the closed state when the angular speed signal indicates that the tilt angle of the vehicle is more than a set tilt angle.

When the tilt angle of the vehicle is more than a set tilt angle, the vehicle is likely to have overturned towards one side and is liable to be in a dangerous situation, and the vehicle sunroof is controlled to close automatically at this time. Once an accident such as overturning occurs, the passengers can be prevented from being separated from the vehicle body if the sunroof is in the closed state when the accident occurs, thereby guaranteeing the safety of the passengers.

Based on the same inventive concept, the embodiment of the present invention also provides a system for controlling the opening and closing of a vehicle sunroof, which is the same as the forgoing method for controlling the opening and closing of the vehicle sunroof in terms of principle and can be implemented with reference to the method described above, and the repeated description thereof will be omitted here.

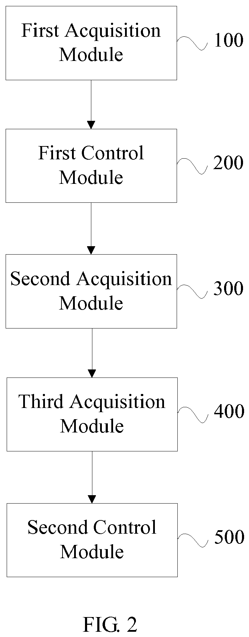

With reference to FIG. 2, Embodiment Two of the present invention provides a system for controlling the opening and closing of a vehicle sunroof, comprising a first acquisition module 100, a first control module 200, a second acquisition module 300, a third acquisition module 400 and a second control module 500.

The first acquisition module 100 is used for acquiring an acceleration signal and an airbag deployment signal from a vehicle. The first control module 200 is used for controlling the vehicle sunroof to close or to maintain a closed state when the acceleration signal acquired by the first acquisition module exceeds a preset threshold and/or the first acquisition module detects the airbag deployment signal. The second acquisition module 300 is used for acquiring a speed signal from the vehicle after the first control module controls the vehicle sunroof to close or to maintain the closed state. The third acquisition module 400 is used for acquiring the tilt angle signal from the vehicle after the speed signal acquired by the second acquisition module indicates that the vehicle speed is 0 and continues for a set period. The second control module 500 is used for controlling the vehicle sunroof to open when the tilt angle signal acquired by the third acquisition module indicates that the vehicle roof is located on the upside or at one side.

Further, the system for controlling the opening and closing of the vehicle sunroof provided by the embodiment of the present invention further comprises a third control module, and the third control module is used for acquiring the acceleration signal from the vehicle before the second acquisition module 300 acquires the speed signal from the vehicle, and stopping controlling the vehicle sunroof to close or to maintain the closed state when the angle between the acceleration and the gravitational acceleration of the vehicle is less than a preset angle value.

Further, the system for controlling the opening and closing of the vehicle sunroof provided by the embodiment of the present invention further comprises a fourth control module, and the fourth control module is used for recording a duration in which the angle between the acceleration and the gravitational acceleration of the vehicle is less than the preset angle value while the third control module acquires the acceleration signal from the vehicle, and stopping controlling the vehicle sunroof to close or to maintain the closed state when the duration is more than a preset duration value.

Further, the system for controlling the opening and closing of the vehicle sunroof provided by the embodiment of the present invention further comprises a fifth control module, and the fifth control module is used for controlling the vehicle sunroof control button to send an alerting signal when the third or fourth control modules stops controlling the vehicle sunroof to close or to maintain the closed state.

Further, the system for controlling the opening and closing of the vehicle sunroof provided by the embodiment of the present invention further comprises a fourth acquisition module, and the fourth acquisition module is used for acquiring the angular speed signal from the vehicle in real time, and controlling the vehicle sunroof to close or to maintain the closed state when the angular speed signal exceeds a preset angular speed threshold.

Further, the system for controlling the opening and closing of the vehicle sunroof provided by the embodiment of the present invention further comprises a fifth acquisition module, and the fifth acquisition module is used for acquiring the tilt angle signal from the vehicle in real time, and controlling the vehicle sunroof to close or to maintain the closed state when the tilt angle signal indicates that the tilt angle of the vehicle is more than a set tilt angle.

With the method and system for controlling the opening and closing of the vehicle sunroof provided by the present invention, the situation where the vehicle is liable to be in an accident can be reflected in time, the vehicle windows can be closed in time when the vehicle has undergone the accident so as to guarantee the safety of the passengers, and the sunroof can be opened automatically when the vehicle is in the steady state after an accident occurs so as to facilitate the escape and rescue for the passengers, thereby effectively increasing the driving safety of the vehicle.

## Claims

1. A method for controlling the opening and closing of a vehicle sunroof, comprising the following steps:
acquiring an acceleration signal and an airbag deployment signal from a vehicle (S100);
controlling the vehicle sunroof to close or to maintain a closed state when the acceleration signal exceeds a preset threshold and/or the airbag deployment signal is detected (S200);
acquiring a speed signal from the vehicle after the vehicle sunroof is controlled to close or to maintain the closed state (S300);
acquiring a tilt angle signal from the vehicle after the speed signal indicates that a vehicle speed is zero and continues for a set period (S400); and
controlling the vehicle sunroof to open when the tilt angle signal indicates that the vehicle roof is located on the upside or at one side (S500); **characterized in that** after controlling the vehicle sunroof to close or to maintain the closed state and
before acquiring the speed signal from the vehicle, the method further comprises the following step:
acquiring the acceleration signal from the vehicle, and stopping controlling the vehicle sunroof to close or to maintain the closed state when an angle between an acceleration and a gravitational acceleration of the vehicle is less than a preset angle value.

2. The method for controlling the opening and closing of the vehicle sunroof according to claim 1, **characterized in that** while acquiring the acceleration signal from the vehicle, the method further comprises the following step:
recording a duration in which the angle between the acceleration and the gravitational acceleration of the vehicle is less than the preset angle value, and stopping controlling the vehicle sunroof to close or to maintain the closed state when the duration is more than a preset duration value.

3. The method for controlling the opening and closing of the vehicle sunroof according to claim 1 or 2, **characterized in that** while stopping controlling the vehicle sunroof to close or to maintain the closed state, the method further comprises the following step:
controlling a vehicle sunroof control button to send an alerting signal.

4. The method for controlling the opening and closing of the vehicle sunroof according to any one of claims 1 to 3, **characterized by** further comprising the following step:
acquiring an angular speed signal from the vehicle in real time, and controlling the vehicle sunroof to close or to maintain the closed state when the angular speed signal exceeds a preset angular speed threshold.

5. The method for controlling the opening and closing of the vehicle sunroof according to any one of claims 1 to 4, **characterized by** further comprising the following step:
acquiring the tilt angle signal from the vehicle in real time, and controlling the vehicle sunroof to close or to maintain the closed state when the tilt angle signal indicates that a tilt angle of the vehicle is more than a set tilt angle.

6. A system for controlling the opening and closing of a vehicle sunroof, comprising a first acquisition module (100), a first control module (200), a second acquisition module (300), a third acquisition module (400), and a second control module (500), wherein
the first acquisition module (100) is used for acquiring an acceleration signal and an airbag deployment signal from a vehicle (S100);
the first control module (200) is used for controlling the vehicle sunroof to close or to maintain a closed state when the acceleration signal acquired by the first acquisition module (100) exceeds a preset threshold and/or the first acquisition module detects the airbag deployment signal (S200);
the second acquisition module (300) is used for acquiring a speed signal from the vehicle after the first control module (200) controls the vehicle sunroof to close or to maintain the closed state (S300);
the third acquisition module (400) is used for acquiring a tilt angle signal from the vehicle after the speed signal acquired by the second acquisition module (300) indicates that a vehicle speed is zero and continues for a set period (S400); and
the second control module (500) is used for controlling the vehicle sunroof to open when the tilt angle signal acquired by the third acquisition module indicates that the vehicle roof is located on the upside or at one side (S500); **characterized by** the system further comprising a third control module, wherein
the third control module is used for acquiring the acceleration signal from the vehicle before the second acquisition module (300) acquires the speed signal from the vehicle, and stopping controlling the vehicle sunroof to close or to maintain the closed state when an angle between an acceleration and a gravitational acceleration of the vehicle is less than a preset angle value.

7. The system for controlling the opening and closing of the vehicle sunroof according to claim 6, **characterized by** further comprising a fourth control module, wherein
the fourth control module is used for recording a duration in which the angle between the acceleration and the gravitational acceleration of the vehicle is less than the preset angle value while the third control module acquires the acceleration signal from the vehicle, and stopping controlling the vehicle sunroof to close or to maintain the closed state when the duration is more than a preset duration value.

8. The system for controlling the opening and closing of the vehicle sunroof according to claim 6 or 7, **characterized by** further comprising a fifth control module, wherein
the fifth control module is used for controlling a vehicle sunroof control button to send an alerting signal when the third or fourth control modules stops controlling the vehicle sunroof to close or to maintain the closed state.

9. The system for controlling the opening and closing of the vehicle sunroof according to any one of claims 6 to 8, **characterized by** further comprising a fourth acquisition module, wherein
the fourth acquisition module is used for acquiring an angular speed signal from the vehicle in real time, and controlling the vehicle sunroof to close or to maintain the closed state when the angular speed signal exceeds a preset angular speed threshold.

10. The system for controlling the opening and closing of the vehicle sunroof according to any one of claims 6 to 9, **characterized by** further comprising a fifth acquisition module, wherein
the fifth acquisition module is used for acquiring the tilt angle signal from the vehicle in real time, and controlling the vehicle sunroof to close or to maintain the closed state when the tilt angle signal indicates that a tilt angle of the vehicle is more than a set tilt angle.

## Patentansprüche

1. Verfahren zum Steuern des Öffnens und Schließens eine Fahrzeugsonnendachs, welches die folgenden Schritte umfasst:
Erhalten eines Beschleunigungssignals und eines Airbag-Einsatzsignals von einem Fahrzeug (S100);
Steuern des Fahrzeugsonnendachs, sich zu schließen oder einen geschlossenen Zustand beizubehalten, wenn das Beschleunigungssignal einen voreigestellten Schwellenwert übersteigt und/oder das Airbag-Einsatzsignal erfasst wird (S200);
Erhalten eines Geschwindigkeitssignals von dem Fahrzeug, nachdem das Fahrzeugsonnendach dahingehend gesteuert wurde, sich zu schließen oder den geschlossenen Zustand beizubehalten (S300);
Erhalten eines Neigungswinkelsignals von dem Fahrzeug, nachdem das Geschwindigkeitssignal anzeigt, dass eine Fahrzeuggeschwindigkeit Null ist und für eine eingestellte Zeitspanne bestehen bleibt (S400); und
Steuern das Fahrzeugsonnendachs, sich zu öffnen, wenn das Neigungswinkelsignal angibt, dass das Fahrzeugdach sich auf der Oberseite oder an einer Seite (S500) befindet; **dadurch gekennzeichnet, dass** nach Steuern des Fahrzeugsonnendachs, sich zu schließen oder den geschlossenen Zustand beizubehalten und vor Erhalten des Geschwindigkeitssignals von dem Fahrzeug das Verfahren ferner den folgenden Schritt umfasst:
Erhalten des Beschleunigungssignals von dem Fahrzeug und Stoppen des Steuerns des Fahrzeugsonnendachs, sich zu schließen oder den geschlossenen Zustand beizubehalten, wenn ein Winkel zwischen einer Beschleunigung und einer Erdbeschleunigung des Fahrzeugs niedriger als ein voreingestellter Winkelwert ist.

2. Verfahren zum Steuern des Öffnens und Schließens des Fahrzeugsonnendachs nach Anspruch 1, **dadurch gekennzeichnet, dass** beim Erhalten des Beschleunigungssignals von dem Fahrzeug das Verfahren ferner den folgenden Schritt umfasst:
Aufzeichnen einer Zeitspanne, in der der Winkel zwischen der Beschleunigung und der Erdbeschleunigung des Fahrzeugs niedriger ist als der voreingestellte Winkelwert, und Stoppen des Steuerns des Fahrzeugsonnendachs, sich zu schließen oder den geschlossenen Zustand beizubehalten, wenn die Zeitspanne länger als ein voreingestellter Zeitspannenwert ist.

3. Verfahren zum Steuern des Öffnens und Schließens des Fahrzeugsonnendachs nach Anspruch 1 oder 2, **dadurch gekennzeichnet, dass** bei Stoppen des Steuerns des Fahrzeugsonnendachs, sich zu schließen oder den geschlossenen Zustand beizubehalten, das Verfahren ferner den folgenden Schritt umfasst:
Steuern eines Fahrzeugsonnendachknopfs, um ein Warnsignal abzugeben.

4. Verfahren zum Steuern des Öffnens und Schließens des Fahrzeugsonnendachs nach Anspruch 1 bis 3, **dadurch gekennzeichnet, dass** bei Stoppen des Steuerns des Fahrzeugsonnendachs, sich zu schließen oder den geschlossenen Zustand beizubehalten, das Verfahren ferner den folgenden Schritt umfasst:
Erhalten eines Winkelgeschwindigkeitssignals von dem Fahrzeug in Echtzeit und Steuern des Fahrzeugsonnendachs, sich zu schließen oder den geschlossenen Zustand beizubehalten, wenn das Winkelgeschwindigkeitssignal einen voreingestellten Schwellenwert der Winkelgeschwindigkeit übersteigt.

5. Verfahren zum Steuern des Öffnens und Schließens des Fahrzeugsonnendachs nach Anspruch 1 bis 4, **dadurch gekennzeichnet, dass** bei Stoppen des Steuerns des Fahrzeugsonnendachs, sich zu schließen oder den geschlossenen Zustand beizubehalten, das Verfahren ferner den folgenden Schritt umfasst:
Erhalten eine Neigungswinkelsignals von dem Fahrzeug in Echtzeit und Steuern des Fahrzeugsonnendachs, sich zu schließen oder den geschlossenen Zustand beizubehalten, wenn das Neigungswinkelsignal angibt, das der Neigungswinkel des Fahrzeugs höher als ein eingestellter Neigungswinkel ist.

6. System zum Steuern des Öffnens und Schließens des Fahrzeugsonnendachs, das ein erstes Erfassungsmodul (100), ein erstes Steuermodul (200), ein zweites Erfassungsmodul (300), ein drittes Erfassungsmodul (400) und ein zweites Steuermodul (500) umfasst, wobei das erste Erfassungsmodul (100) zum Erhalten eines Beschleunigungssignals und eines Airbag-Einsatzsignals von einem Fahrzeug (S100) verwendet wird;
das erste Steuermodul (200) zum Steuern des Fahrzeugsonnendachs, sich zu schließen oder einen geschlossenen Zustand beizubehalten, verwendet wird, wenn das vom ersten Erfassungsmodul (100) erhaltene Beschleunigungssignal einen voreingestellten Schwellenwert übersteigt und/oder wenn das erste Erfassungsmodul das Airbag-Einsatzsignal (S200) erfasst; das zweite Erfassungsmodul (300) verwendet wird, um ein Geschwindigkeitssignal von dem Fahrzeug zu erhalten, nachdem das erste Steuermodul (200) das Fahrzeugsonnendach steuert, sich zu schließen oder den geschlossenen Zustand beizubehalten (S300);
das dritte Erfassungsmodul (400) verwendet wird, ein Neigungswinkelsignal von dem Fahrzeug zu erhalten, nachdem das von dem zweiten Erfassungsmodul (300) erhaltene Geschwindigkeitssignal angibt, dass eine Fahrzeuggeschwindigkeit Null ist und für eine eingestellte Zeitspanne (S400) bestehen bleibt; und
das zweite Steuermodul (500) zum Steuern des Fahrzeugsonnendachs, sich zu öffnen, verwendet wird, wenn das vom dritten Erfassungsmodul erhaltene Neigungswinkelsignal angibt, dass das Fahrzeugdach sich auf der Oberseite oder an einer Seite (S500) befindet; **dadurch gekennzeichnet, dass** das System ferner ein drittes Steuermodul umfasst, wobei das dritte Steuermodul zum Erhalten des Beschleunigungssignals von dem Fahrzeug verwendet wird, bevor das zweite Erfassungsmodul (300) das Geschwindigkeitssignal von dem Fahrzeug erhält, und zum Stoppen des Steuern des Fahrzeugsonnendachs, sich zu schließen oder den geschlossenen Status beizubehalten, wenn ein Winkel zwischen einer Beschleunigung und einer Erdbeschleunigung des Fahrzeugs geringer ist als ein voreingestellter Winkelwert.

7. System zum Steuern des Öffnens und Schließens des Fahrzeugsonnendachs nach Anspruch 6, **dadurch gekennzeichnet**, das es ferner ein viertes Steuermodul umfasst, wobei das vierte Steuermodul verwendet wird, eine Zeitspanne aufzuzeichnen, in der der Winkel zwischen der Beschleunigung und der Erdbeschleunigung des Fahrzeugs geringer ist als ein voreingestellter Winkel, während das dritte Steuermodul das Beschleunigungssignal von dem Fahrzeug erhält, und das Steuern des Fahrzeugsonnendachs zu stoppen, sich zu schließen den geschlossenen Zustand beizubehalten, wenn die Zeitspanne länger als ein voreingestellter Zeitspannenwert ist.

8. System zum Steuern des Öffnens und Schließens des Fahrzeugsonnendachs nach Anspruch 6 oder 7, **dadurch gekennzeichnet**, das es ferner ein viertes Steuermodul umfasst, wobei
das fünfte Steuermodul zum Steuern eines Fahrzeugsonnendachknopfes verwendet wird, um ein Warnsignal abzugeben, wenn das dritte oder vierte Steuermodul aufhört, das Fahrzeugsonnendach zu steuern, sich zu schließen oder den geschlossenen Zustand beizubehalten.

9. System zum Steuern des Öffnens und Schließens des Fahrzeugsonnendachs nach Anspruch 6 bis 8, **dadurch gekennzeichnet**, das es ferner ein viertes Erfassungsmodul umfasst, wobei
das vierte Erfassungsmodul zum Erhalten eines Winkelgeschwindigkeitssignals von dem Fahrzeug in Echtzeit und zum Steuern des Fahrzeugsonnendachs, sich zu schließen oder den geschlossenen Zustand aufrechtzuerhalten, verwendet wird, wenn das Winkelgeschwindigkeitssignal einen voreingestellten Schwellenwert der Winkelgeschwindigkeit übersteigt.

10. System zum Steuern des Öffnens und Schließens des Fahrzeugsonnendachs nach Anspruch 6 bis 9, **dadurch gekennzeichnet**, das es ferner ein fünftes Erfassungsmodul umfasst, wobei
das vierte Erfassungsmodul zum Erhalten eines Neigungswinkelsignals von dem Fahrzeug in Echtzeit und zum Steuern des Fahrzeugsonnendachs, sich zu schließen oder den geschlossenen Zustand aufrechtzuerhalten, verwendet wird, wenn das Neigungswinkelsignal angibt, dass ein Neigungswinkel des Fahrzeugs größer als ein voreingestellter Neigungswinkel ist.

## Revendications

1. Procédé de commande de l'ouverture et de la fermeture d'un toit ouvrant de véhicule, comprenant les étapes suivantes :
acquisition d'un signal d'accélération et d'un signal de déploiement d'airbag à partir d'un véhicule (S100) ;
commande de fermeture ou de maintien d'un état fermé du toit ouvrant du véhicule lorsque le signal d'accélération dépasse un seuil prédéfini et/ou que le signal de déploiement d'airbag est détecté (S200) ;
acquisition d'un signal de vitesse à partir du véhicule après que le toit ouvrant du véhicule est commandé pour fermer ou pour maintenir l'état fermé (S300) ;
acquisition d'un signal d'angle d'inclinaison à partir du véhicule une fois que le signal de vitesse indique qu'une vitesse de véhicule est nulle et continue pendant une durée établie (S400) ; et
commande d'ouverture du toit ouvrant du véhicule lorsque le signal d'angle d'inclinaison indique que le toit du véhicule se trouve sur le côté supérieur ou d'un côté (S500) ; **caractérisé en ce qu'**après la commande de fermeture ou de maintien à l'état fermé du toit ouvrant du véhicule et avant d'acquérir le signal de vitesse provenant du véhicule, le procédé comprend en outre l'étape suivante :
acquisition du signal d'accélération du véhicule et arrêt de la commande de fermeture ou de maintien de l'état fermé du toit ouvrant du véhicule lorsqu'un angle entre une accélération et une accélération gravitationnelle du véhicule est inférieure à une valeur d'angle prédéfinie.

2. Procédé de commande de l'ouverture et de la fermeture du toit ouvrant d'un véhicule selon la revendication 1, **caractérisé en ce que** pendant l'acquisition du signal d'accélération du véhicule, le procédé comprend en outre l'étape suivante :
enregistrement d'une durée au cours de laquelle l'angle séparant l'accélération et l'accélération gravitationnelle du véhicule est inférieure à la valeur prédéfinie d'angle, et arrêt de la commande de la fermeture ou du maintien de l'état fermé du véhicule quand la durée dépasse une durée prédéfinie.

3. Procédé de commande de l'ouverture et de la fermeture du toit ouvrant d'un véhicule selon la revendication 1 ou 2, **caractérisé en ce que** pendant l'arrêt de la commande de la fermeture ou du maintien de l'état fermé du toit ouvrant du véhicule, le procédé comprend en outre l'étape suivante :
la commande d'un bouton de commande de toit ouvrant de véhicule pour envoyer un signal d'alerte.

4. Procédé de commande de l'ouverture et de la fermeture du toit ouvrant d'un véhicule selon l'une quelconque des revendications 1 à 3, **caractérisé par** le fait de comprendre en outre l'étape suivante :
acquisition d'un signal de vitesse angulaire à partir du véhicule en temps réel, et la commande de la fermeture ou du maintien de l'état fermé du toit ouvrant du véhicule quand le signal de vitesse angulaire dépasse un seuil prédéfini de vitesse angulaire.

5. Procédé de commande de l'ouverture et de la fermeture du toit ouvrant d'un véhicule selon l'une quelconque des revendications 1 à 4, **caractérisé par** le fait de comprendre en outre l'étape suivante :
acquisition du signal d'angle d'inclinaison à partir du véhicule en temps réel, et commande de la fermeture ou du maintien de l'état fermé du toit ouvrant du véhicule quand l'angle d'inclinaison indique qu'un angle d'inclinaison du véhicule dépasse un angle défini d'inclinaison.

6. Système de commande de l'ouverture et de la fermeture d'un toit ouvrant de véhicule, comprenant un premier module d'acquisition (100), un premier module de commande (200), un deuxième module d'acquisition (300), un troisième module d'acquisition (400) et un deuxième module de commande (500),
le premier module de commande (100) étant utilisé pour acquérir un signal d'accélération et un signal de déploiement d'airbag à partir d'un véhicule (S100) ;
le premier module de commande (200) étant utilisé pour commander la fermeture ou le maintien d'un état fermé du toit ouvrant du véhicule quand le signal d'accélération acquis par le premier module d'acquisition (100) dépasse un seuil prédéfini et/ou que le premier module d'acquisition détecte le signal de déploiement d'airbag (S200) ;
le deuxième module d'acquisition (300) étant utilisé pour acquérir un signal de vitesse à partir du véhicule après que le premier module de commande (200) commande de la fermeture ou du maintien de l'état fermé du toit ouvrant du véhicule (S300) ;
le troisième module d'acquisition (400) étant utilisé pour acquérir un signal d'angle d'inclinaison à partir du véhicule une fois que le signal de vitesse acquis par le deuxième module d'acquisition (300) indique qu'une vitesse de véhicule est nulle et continue pendant une période définie (S400) ; et
le deuxième module de commande (500) étant utilisé pour commander la fermeture ou le maintien de l'état fermé du toit ouvrant du véhicule quand le signal d'angle d'inclinaison acquis par le troisième module d'acquisition indique que le toit du véhicule se trouve sur le côté supérieur ou sur un côté (S500) ; **caractérisé par le fait que** le système comprend en outre un troisième module de commande,
le troisième module de commande étant utilisé pour acquérir le signal d'accélération à partir du véhicule avant que le deuxième module d'acquisition (300) n'acquière le signal de vitesse à partir du véhicule, et pour arrêter de commander la fermeture du toit ouvrant du véhicule ou pour maintenir l'état fermé lorsqu'un angle entre une accélération et une accélération gravitationnelle du véhicule est inférieur à une valeur prédéfinie d'angle.

7. Système de commande de l'ouverture et de la fermeture du toit ouvrant d'un véhicule selon la revendication 6, **caractérisé par** le fait de comprendre en outre un quatrième module de commande,
le quatrième module de commande étant utilisé pour enregistrer une durée où l'angle entre l'accélération et l'accélération gravitationnelle du véhicule est inférieur à l'angle prédéfini pendant que le troisième module de commande acquiert le signal d'accélération à partir du véhicule, et pour arrêter la commande de la fermeture ou du maintien de l'état fermé du toit ouvrant du véhicule quand la durée dépasse une durée prédéfinie.

8. Système de commande de l'ouverture et de la fermeture du toit ouvrant d'un véhicule selon la revendication 6 ou 7, **caractérisé par** le fait de comprendre un cinquième module de commande,
le cinquième module de commande étant utilisé pour commander l'envoi d'un signal d'alerte par un bouton de commande de toit ouvrant de véhicule lorsque le troisième ou quatrième module de commande cesse de commander la fermeture ou le maintien de l'état fermé du toit ouvrant du véhicule.

9. Système de commande de l'ouverture et de la fermeture du toit ouvrant d'un véhicule selon l'une quelconque des revendications 6 à 8, **caractérisé par** le fait de comprendre en outre un quatrième module d'acquisition,
le quatrième module d'acquisition étant utilisé pour acquérir un signal de vitesse angulaire à partir du véhicule en temps réel, et pour commander la fermeture du toit ouvrant du véhicule ou pour maintenir l'état fermé quand le signal de vitesse angulaire dépasse un seuil prédéfini de vitesse angulaire.

10. Système de commande de l'ouverture et de la fermeture du toit ouvrant d'un véhicule selon l'une quelconque des revendications 6 à 9, **caractérisé par** le fait de comprendre en outre un cinquième module d'acquisition,
le cinquième module d'acquisition étant utilisé pour acquérir le signal d'angle d'inclinaison à partir du véhicule en temps réel, et pour commander la fermeture du toit ouvrant du véhicule ou pour maintenir l'état fermé quand le signal d'angle d'inclinaison indique qu'un angle d'inclinaison du véhicule dépasse un angle défini d'inclinaison.
